# FASCICULE DE BREVET EUROPEEN

(11) **EP 1 048 518 B1**
(45) Date de publication et mention de la délivrance du brevet: **23.03.2005**
(21) Numéro de dépôt: 00401181.3
(22) Date de dépôt: 28.04.2000
(51) Int. Cl.: B60N 3/04

(54) **Tapis de coffre autoporteur intégrant un couvercle de roue de secours**
Selbsttragende Kofferraummatte mit integrierter Abdeckung für Reserverad
Self supporting boot mat housing a cover for spare wheel

(30) Priorité: 30.04.1999 FR 9905519
(43) Date de publication de la demande: 02.11.2000
(73) Titulaire: Renault s.a.s., 92100 Boulogne Billancourt (FR)
(72) Inventeur: Pounceau, Philippe, 78610 Le Perray en Yvelines (FR)

(56) Documents cités:
- EP-A- 0 713 806
- DE-A- 2 424 001
- DE-A- 3 722 873
- DE-A- 3 904 451
- US-A- 4 801 169
- US-A- 5 322 335

## Description

L'invention concerne un tapis de coffre autoporteur qui recouvre totalement ou partiellement le plancher du compartiment à bagages d'un véhicule automobile.

Certains véhicules possèdent un tapis de coffre autoporteur, sous lequel est placée une roue de secours, ou tout autre objet d'utilisation peu fréquente. Un tel tapis permet de dissimuler la roue de secours. L'accès à celle-ci est obtenu au moyen d'un couvercle disposé sur le tapis de coffre. Un tel tapis permet de plus, dans une certaine mesure, de participer à l'amélioration de l'isolation acoustique entre le compartiment à bagages et le compartiment pour les passagers.

Un tapis selon le préambule de la revendication 1 est par exemple connu du document DE-A-3 904 451.

Généralement de tels tapis se composent de différentes couches, le plus souvent deux, ainsi que d'éléments rapportés, chacun remplissant des fonctions différentes. La couche supérieure, sur laquelle seront posés ensuite différents objets, se compose habituellement d'un tapis aiguilleté ou d'un plastique rigide, résistant à la perforation et à l'abrasion. La couche inférieure est généralement un isolant en feutre ou en mousse. Le couvercle, réalisé par exemple en Isorel, est une pièce rapportée sur le tapis par un dispositif de fixation permettant l'ouverture dudit couvercle. De plus, la rigidité d'un tel tapis de coffre est habituellement assurée par l'ajout d'entretoise, en masse rigide ou bien en Polypropylène expansé, sur la face inférieure du tapis de coffre.

De tels tapis de coffre autoporteur présentent plusieurs inconvénients. Le fait qu'ils se composent de plusieurs pièces rapportées contribue à la création de nuisances sonores dues aux jeux entre les différents éléments du tapis de coffre. En particulier, il est difficile de supprimer le jeu latéral entre le couvercle et le tapis de coffre. De plus, des irrégularités de surface apparaîtront au niveau des contacts entre le couvercle et le tapis. Finalement, la présence de plusieurs pièces rapportées impose un montage en plusieurs étapes et augmente le prix final du tapis.

Afin de remédier à ces inconvénients, l'invention a pour objet un tapis de coffre autoporteur réalisé avec un nombre de pièces et un coût réduit.

Selon une caractéristique de l'invention, au moins l'une des couches du tapis de coffre possède des zones compressées de façon inégale.

Selon une autre caractéristique avantageuse de l'invention, les couches du tapis de coffre sont découpées de façon à former un couvercle relié au reste du tapis selon un bord commun.

Selon une autre caractéristique préférentielle de l'invention, au moins l'une des couches du tapis de coffre possède une zone compressée centrale entourée, au moins en partie, par une zone moins compressée.

Selon une autre caractéristique favorable de l'invention, au moins une partie d'une zone fortement compressée d'une couche du tapis de coffre forme une entretoise.

Selon une autre caractéristique, l'entretoise a une section en forme de V.

Selon une autre caractéristique, l'entretoise est réalisée, au moins en partie, sur le contour découpé du couvercle, et un élément de l'entretoise, lorsque le couvercle est fermé, est en appui sur le bord correspondant du tapis de coffre pour former une lèvre d'étanchéité.

Selon une caractéristique, un marquage est effectué entre les différentes couches du tapis de coffre au niveau du bord commun entre le couvercle et le reste du tapis.

Selon une caractéristique, le tapis de coffre comporte des tubes de rigidifications.

Selon une caractéristique, au moins l'une des couches du tapis de coffres comportant des zones inégalement compressées est en feutre.

D'autres caractéristiques et avantages de l'invention apparaîtront à la lecture de la description d'exemples de réalisation d'un tapis de coffre en référence aux dessins annexés dans lesquels :
- la figure 1 représente une coupe transversale du tapis de coffre mise en place dans le compartiment à bagages d'un véhicule automobile.
- la figure 2 représente un détail du principe de rigidification du tapis de coffre.
- la figure 3 représente une vue en perspective de la couche inférieure du tapis de coffre avant assemblage avec la couche supérieure.

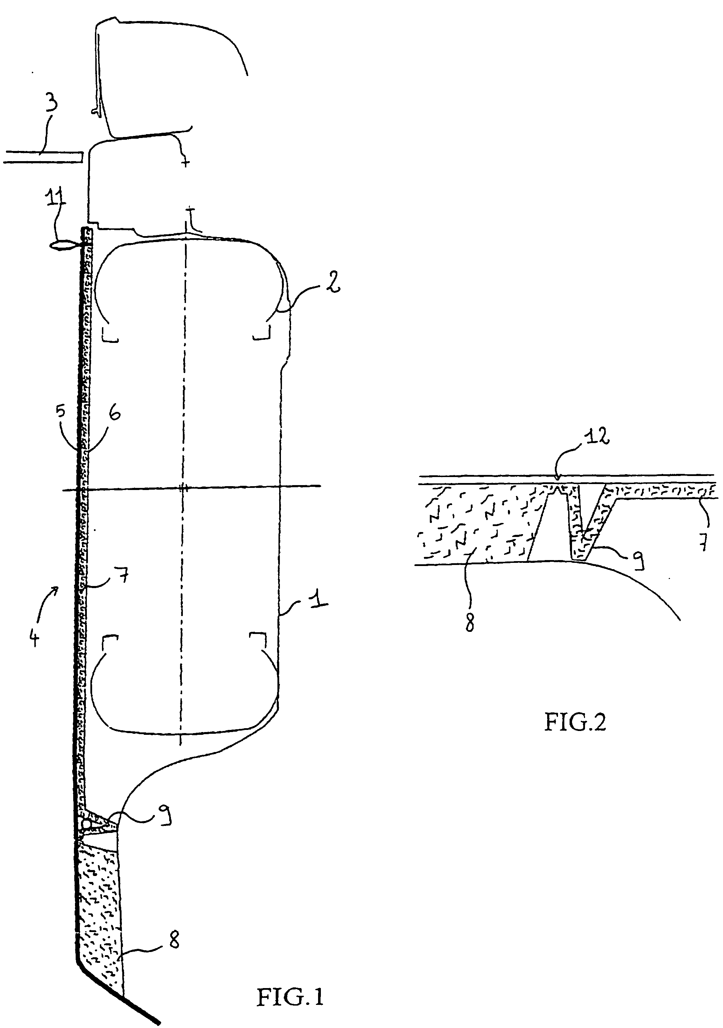

Tel que représenté à la figure 1, un compartiment à bagages est délimité par un plancher 1, qui comporte un logement recevant la roue de secours 2. Le compartiment à bagages est fermé par un haillon 3. Le plancher 1 supporte un tapis de coffre 4 qui est composé de deux couches 5 et 6. La couche supérieure est d'épaisseur uniforme tandis que la couche inférieure présente des zones fortement compressées 7 et des zones peu ou pas compressées 8.

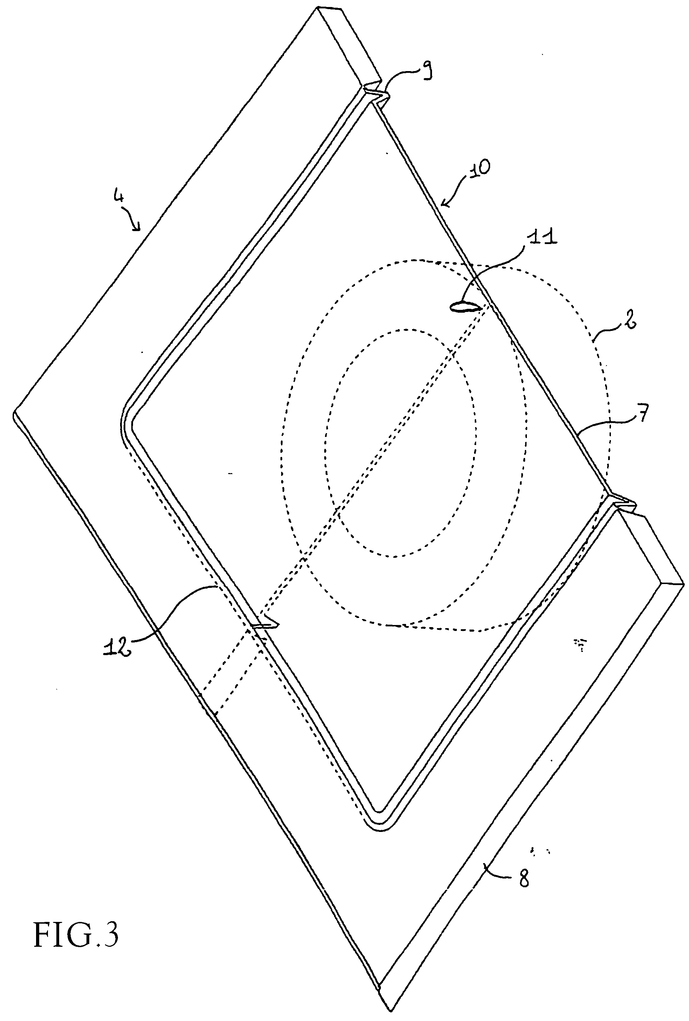

Un exemple de répartition de ces zones est donné par la figure 3. D'une manière générale, la zone fortement compressée 7 est celle qui se situe au-dessus de la roue de secours 2. Cette zone fortement compressée 7 assure une meilleure rigidité à l'ensemble tandis que la zone peu ou pas compressée 8 assure une meilleure isolation acoustique. On utilise ainsi les différentes propriétés d'un même matériau (insonorisation acoustique) dans différents états (compressés ou non) sans avoir à recourir à l'emploi de plusieurs couches.

Afin de renforcer encore davantage la zone comprimée 7 de la couche inférieure 6 du tapis de coffre 4, une entretoise 9 est formée directement dans la couche inférieure 7. A titre d'exemple, les figures 1, 2 et 3 montrent une entretoise en forme de V. Cette entretoise repose sur le plancher 1 du compartiment à bagages, et est disposée de telle sorte qu'elle entoure, au moins en partie, le logement de la roue de secours.

Afin de pouvoir accéder à la roue de secours, une ouverture est pratiquée par découpage dans les différentes couches du tapis de coffre. On obtient ainsi un couvercle 10, agencé de telle façon que l'on puisse accéder, lors de son ouverture, à la roue de secours 2. Ce couvercle 10 est situé au niveau de la partie compressée 7 de la couche inférieure 6. Une partie du tapis de coffre 4 n'est pas découpée et sert d'axe de pivotement du couvercle 10 lorsqu'on souhaite accéder à la roue de secours 2. On obtient finalement un couvercle 10 intégré au tapis de coffre, et ce, sans ajout de pièces extérieures.

La figure 3 représente un couvercle 10 de type rectangulaire, dont un côté est confondu avec un bord du tapis de coffre 4, celui situé au niveau du système de fermeture 3 du compartiment à bagages. L'axe de pivotement de ce couvercle 10 est parallèle à ce même côté et est situé prés du bord opposé du tapis de coffre. Il est toutefois possible d'imaginer une solution différente. Par exemple, l'axe de pivotement pourrait être situé perpendiculairement par rapport au bord touchant le système de fermeture 3. L'ouverture du couvercle 10 se faisant sur le "côté" du compartiment à bagages. La solution retenue dépendra essentiellement de la forme et de l'emplacement choisis pour les autres éléments devant intervenir dans cette zone d'un véhicule automobile.

La forme de l'entretoise 9 est fonction de celle du plancher sur lequel elle repose. Elle est solidaire du couvercle 10. On ajustera la hauteur de cette entretoise 9 de façon à ce que le tapis de coffre présente une surface sensiblement plane lorsque le couvercle 10 est refermé.

La figure 3 montre un mode de réalisation particulier dans lequel l'entretoise 9 peut être disposée juste en bordure de l'ouverture du couvercle 10. Cette disposition comporte l'avantage suivant : il est possible d'ajuster la forme de l'entretoise de façon à ce qu'elle vienne en appui sur le rebord opposé et fixe de la couche inférieure 6 lorsque le couvercle 10 est fermé. On supprime ainsi tout mouvement possible du couvercle 10 par rapport au reste du tapis dans la position fermée. La fermeture et le maintien en position fermée du couvercle 10 s'obtient sans dispositif supplémentaire. De plus ce système de fermeture permet d'obtenir une meilleure insonorisation acoustique. Sur la figure 3, ce résultat est obtenu en utilisant une entretoise en forme de "V" avec un angle de "V" suffisamment grand. Lors de la fermeture du couvercle 10, une branche du "V" vient appuyer sur le bord fixe du tapis de coffre, assurant ainsi une liaison sans jeu.

La réalisation de ce tapis de coffre comprend essentiellement deux étapes : une première pendant laquelle la couche inférieure 6 est formée, et une seconde pendant laquelle la couche supérieure 5, et les couches intermédiaires s'il y a lieu, sont assemblées par collage lors d'une seconde étape.

Afin de faciliter la flexion du couvercle 10 autour de son axe de pivotement, une charnière 12 est réalisée sur une partie de cet axe. Cette charnière 12 est effectuée par marquage ( voir figure 2) lors de l'assemblage des deux couches 5 et 6 du tapis de coffre. La longueur que l'on souhaite donner à cette charnière dépend en partie de la facilité avec laquelle l'utilisateur devra pouvoir faire pivoter le couvercle 10 autour de son axe. Il est possible d'imaginer une charnière formée par plusieurs segments de marquage espacés de façon régulière ou non le long de l'axe de rotation.

L'ouverture du tapis de coffre peut être facilité par l'emploi d'une cordelette 11 ou de tout autre dispositif assurant une prise adéquate qui est fixée sur le couvercle 10 de façon judicieuse. Le plus souvent, il sera préférable de situer cette cordelette 11 le plus loin possible de l'axe de rotation du couvercle 10. La figure 3 montre un exemple dans lequel la cordelette 11 est située prés du système de fermeture 3 du compartiment à bagages, permettant ainsi l'ouverture du couvercle 10 tout en exerçant un effort minimum.

Si l'on souhaite un tapis de coffre 4 possédant une rigidité supérieure à celle que peut offrir l'entretoise et les parties compressées de la couche inférieure 6 seule, il est possible de noyer un ou plusieurs tubes dans la couche inférieure 6 afin de rigidifier l'ensemble encore davantage.

La couche inférieure 6 du tapis de coffre 4 est préférentiellement constituée en feutre. La couche supérieure 5 du tapis de coffre 4 est, elle, classiquement constituée d'un plastique rigide résistant à la perforation et à l'abrasion, dont l'aspect extérieur est à choisir aussi suivant des critères esthétiques.

La présente invention n'est nullement limitée au mode de réalisation décrit et illustré qui n'a été donné qu'à titre d'exemple. Au contraire, l'invention est seulement limitée par l'étendue de protection définie dans les revendications.

## Revendications

1. Tapis de coffre (4), recouvrant partiellement ou totalement le plancher de charge (1) d'un coffre à bagages d'un véhicule automobile, constitué de plusieurs couches (5,6) **caractérisé en ce qu'**au moins l'une des couches (6) possède au moins une première zone fortement compressée (7) et une seconde zone peu ou pas compressée (8).

2. Tapis de coffre (4) selon la revendication 1, **caractérisé en ce que** les couches (5,6) sont découpées de façon à former un couvercle (10) relié au reste du tapis de coffre (4) selon un bord commun.

3. Tapis de coffre (4) selon les revendications 1 ou 2, **caractérisé en ce que** ladite au moins une zone fortement compressée (7) d'au moins l'une des couches (6) est une zone compressée centrale entourée au moins en partie par ladite zone peu ou pas compressée (8).

4. Tapis de coffre (4) selon l'une des revendications 1 à 3, **caractérisé en ce qu'**au moins une partie de ladite au moins une zone fortement compressée (7) d'une (6) des couches (5,6) du tapis de coffre (4) forme une entretoise (9).

5. Tapis de coffre (4) selon la revendication 4, **caractérisé en ce que** l'entretoise (9) a une section en forme de V.

6. Tapis de coffre (4) selon la revendication 5, **caractérisé en ce que** l'entretoise (9) est réalisée, au moins en partie, sur le contour découpé du couvercle (10), et **en ce qu'**un élément de l'entretoise (9), lorsque le couvercle (10) est fermé, est en appui sur le bord correspondant du tapis de coffre (4) pour former une lèvre d'étanchéité.

7. Tapis de coffre (4) selon l'une des revendications 3 à 6 en combinaison avec la revendication 2 **caractérisé en ce qu'**un marquage (12) est effectué dans les différentes couches (5,6) au niveau du bord commun entre le couvercle (10) et le reste du tapis de coffre (4).

8. Tapis de coffre (4) selon l'une des revendications 1 à 7, **caractérisé en ce qu'**il comporte des tubes de rigidifcation.

9. Tapis de coffre (4) selon l'une des revendications 1 à 8, **caractérisé en ce qu'**au moins l'une des couches (6), comportant des zones inégalement compressées, est en feutre.

## Patentansprüche

1. Kofferraummatte (4), die teilweise oder ganz die Ladefläche ( 1 ) eines Gepäck-Kofferraums eines Kraftfahrzeugs bedeckt, die aus zwei Schichten (5, 6) besteht,
**dadurch gekennzeichnet, dass** mindestens eine der Schichten (6) mindestens einen ersten stark komprimierten Bereich (7) und einen zweiten, wenig oder nicht komprimierten Bereich (8) besitzt.

2. Kofferraummatte (4) gemäß Anspruch 1, **dadurch gekennzeichnet, dass** die Schichten (5, 6) so ausgeschnitten sind, dass sie eine Abdeckung (10) bilden, die mit dem Rest der Kofferraummatte (4) gemäß einem gemeinsamen Rand verbunden ist.

3. Kofferraummatte (4) gemäß Anspruch 1 oder 2, **dadurch gekennzeichnet, dass** der mindestens eine stark komprimierte Bereich (7) der mindestens einen Schicht (6) ein zentraler komprimierter Bereich ist, der zumindest teilweise vom wenig oder nicht komprimierten Bereich (8) umgeben ist.

4. Kofferraummatte (4) gemäß einem der Ansprüche 1 bis 3, **dadurch gekennzeichnet, dass** mindestens ein Teil des mindestens einen stark komprimierten Bereichs (7) einer (6) der Schichten (5, 6) der Kofferraummatte (4) eine Querverstrebung (9) bildet.

5. Kofferraummatte (4) gemäß Anspruch 4, **dadurch gekennzeichnet, dass** die Querverstrebung (9) einen Querschnitt in Form eines V aufweist.

6. Kofferraummatte (4) gemäß Anspruch 5, **dadurch gekennzeichnet, dass** die Querverstrebung (9) zumindest teilweise auf der ausgeschnittenen Umrisslinie der Abdeckung (10) realisiert ist, und dadurch, dass ein Element der Querverstrebung (9), wenn die Abdeckung (10) geschlossen ist, auf dem entsprechenden Rand der Kofferraummatte (4) aufliegt, um eine Dichtungslippe zu bilden.

7. Kofferraummatte (4) gemäß einem der Ansprüche 3 bis 6 in Kombination mit Anspruch 2, **dadurch gekennzeichnet, dass** eine Markierung (12) in den verschiedenen Schichten (5, 6) vorgenommen ist, auf der Höhe des gemeinsamen Rands zwischen der Abdeckung (10) und dem Rest der Kofferraummatte (4).

8. Kofferraummatte (4) gemäß einem der Ansprüche 1 bis 7, **dadurch gekennzeichnet, dass** sie Rohre zur Versteifung aufweist.

9. Kofferraummatte (4) gemäß einem der Ansprüche 1 bis 8, **dadurch gekennzeichnet, dass** mindestens eine der Schichten (6), die ungleich komprimierte Bereiche aufweist, aus Filz ist.

## Claims

1. Boot carpet (4), partially or totally covering the boot floor (1) of a luggage boot of a motor vehicle, composed of several layers (5, 6) **characterized in that** at least one of the layers (6) has at least a first highly compressed zone (7) and a second non or slightly compressed zone (8).

2. Boot carpet (4) according to claim 1, **characterized in that** the layers (5, 6) are cut out so as to form a cover (10) connected to the rest of the boot carpet (4) along a common edge.

3. Boot carpet (4) according to one of claims 1 or 2, **characterized in that** said at least one highly compressed zone (7) of at least one of the layers (6) is a central compressed zone at least partly surrounded by said non or slightly compressed zone (8).

4. Boot carpet (4) according to one of claims 1 to 3, **characterized in that** at least one part of said at least one highly compressed zone (7) of one (6) of the layers (5,6) of the boot carpet (4) forms a brace (9).

5. Boot carpet (4) according to claim 4, **characterized in that** the brace (9) has a V-shaped section.

6. Boot carpet (4) according to claim 5, **characterized in that** the brace (9) is produced, at least in part, on the cut out contour of the cover (10), and **in that** one element of the brace (9), when the cover (10) is closed, is resting on the corresponding edge of the boot carpet (4) to form a sealing lip.

7. Boot carpet (4) according to one of claims 3 to 6, in combination with claim 2, **characterized in that** a marking (12) is produced in the different layers (5, 6) at the level of the common edge between the cover (10) and the rest of the boot carpet (4).

8. Boot carpet (4) according to one of claims 1 to 7, **characterized in that** it comprises stiffening tubes.

9. Boot carpet (4) according to one of claims 1 to 8, **characterized in that** at least one of the layers (6), comprising unequally compressed zones, is made of felt.
